# EUROPÄISCHE PATENTANMELDUNG

(11) **EP 4 321 383 A1**
(43) Veröffentlichungstag der Anmeldung: **14.02.2024**
(21) Anmeldenummer: 23176610.6
(22) Anmeldetag: 01.06.2023
(51) Int. Cl.: B60R 7/02

(54) **SCHIENENSYSTEM FÜR DECKENSEITIGE LAGERUNG IN WOHNMOBILSTAURÄUMEN**

(30) Priorität: 12.08.2022 DE 202022104592 U
(71) Anmelder: Güldner, Michael, 86368 Gersthofen (DE)
(72) Erfinder: Güldner, Michael, 86368 Gersthofen (DE)
(74) Vertreter: ERNICKE Patent- und Rechtsanwälte PartmbB

(57) **Zusammenfassung**

Die Erfindung betrifft ein Deckenlagersystem (3) für einen Stauraum (2) eines Wohnmobils (3). Das Deckenlagersystem (3) umfasst ein Schienensystem (5) mit mindestens einer Schiene (6) und mehreren Abstandhaltern (7), wobei das Schienensystem (5) dazu ausgebildet ist, mit den Abstandhaltern (7) hängend an einer Decke (10) des Stauraums (2) befestigt zu werden, und dazu ausgebildet ist, mindestens eine Kiste (4) hängend und in Längsrichtung (L) der Schiene (6) ausziehbar zu halten.

## Beschreibung

Die Erfindung liegt auf dem Gebiet der Stauraumlösungen für Wohnmobile.

Wohnmobile verfügen in der Regel über verschiedene Stauräume. Häufig haben Wohnmobile am Heck einen größeren Stauraum, auch Heckgarage genannt, in dem sich verschiedene Gegenstände lagern lassen, z.B. Staubsauger, Grills, Stühle, Spielzeug, Fahrräder, Reinigungsmittel usw. Aufgrund der vielfältigen Nutzungsmöglichkeiten sind solche Stauräume häufig einfache leere Räume, die vom Benutzer individuell genutzt werden können.

Bei größeren Wohnmobilen sind typische Heckgaragen in der Regel groß genug, dass auch größere Gegenstände wie Fahrräder darin untergebracht werden können. Die Stauräume sind häufig über eine Beladeöffnung zugänglich, die mit einer verriegelbaren Tür verschlossen ist. Je nach Ausführung kann der Stauraum von einer oder beiden Seiten, d.h. von der rechten und/oder linken Fahrzeugseite, zugänglich sein. In manchen Ausführungsformen ist der Stauraum auch von hinten zugänglich.

Um den zur Verfügung stehenden Platz auch für kleinere Gegenstände effektiv nutzen zu können, sind aus dem Stand der Technik verschiedene Lagersysteme für Wohnmobilstauräume bekannt. Solche Lagersysteme sind an den Einsatz im Wohnmobil angepasst und häufig als nachrüstbare Zubehörkomponenten ausgebildet.

Aus DE 20 2017 101 690 U1 ist ein Regalsystem für Wohnmobile bekannt, das mehrere Pfosten und Querstreben umfasst, mit denen Regalfächer gebildet werden. Das Regelsystem kann mit Spannmitteln in einer Heckgarage eingespannt werden.

Aus DE 20 2016 100 334 U1 ist ein Schubladensystem in einem Regal bekannt, das auf Rollen in einen Wohnmobilstauraum angeordnet wird und um eine vertikale Achse schwenkbar ist, um das Ausziehen der Schubladen zu ermöglichen.

Aus DE 20 2019 104 414 U1 ist ein Auszugsystem für Aufbewahrungszwecke in Wohnmobilen bekannt, das einen ausziehbaren Rahmen umfasst. Der ausziehbare Rahmen bildet einen Schubkasten, der am Boden des Stauraums angeordnet werden kann und auf dem Boxen gestellt werden können. Der Rahmen lässt sich seitlich aus dem Stauraum herausziehen und darauf aufladen.

DE 20 2013 007 744 U1 offenbart ein Trägersystem mit einem selbsttragenden Rahmen, der mit Schraubstützen und Anpresstellern zwischen Boden und Decke des Stauraums eingespannt wird. Im Trägersystem können verschiedene Schienensysteme, unter anderem für seitlich hängende Aufbewahrungssysteme (z.B. Schuhregal), angeordnet werden. Vorteilhaft an dieser Lösung sei es, dass durch die Einspannung zwischen Boden und Decke keine Aufhängung an Wand oder Decke notwendig sei.

DE 20 2019 003 426 U1 offenbart ein Schienensystem, das an der Deckenunterseite einer Heckgarage eines Wohnmobils angeordnet wird. An der Laufschiene können Rollwagen eingesetzt werden, die verschiedene Einhängemöglichkeiten für Aufbewahrungstaschen (z.B. für Fahrräder und Stühle) bieten.

Die aus dem Stand der Technik bekannten Stauraumsysteme sind zwar für die Aufbewahrung kleinerer Gegenstände an der Wand oder großer Gegenstände in der gesamten Höhe des Stauraums vorteilhaft, haben jedoch den Nachteil, dass stets der Boden oder die Seitenwände des Stauraums belegt werden. Der von den Lagersystemen in Anspruch genommene Bauraum steht für frei im Stauraum gelagerte Gegenstände nicht mehr zur Verfügung. Außerdem sind die Systeme häufig von außen schwer zugänglich.

Die Erfahrung zeigt, dass bei der üblichen Beladung des Stauraums von Wohnmobilen im Bodenbereich viele verschiedene Gegenstände gelagert werden, die in der Höhe nicht den vollständigen Stauraum ausfüllen.

Mit den bekannten Stauraumsystemen kann nur entweder strukturierter Stauraum für Kleingegenstände oder großer Stauraum für Fahrräder, Grills oder ähnliches bereitgestellt werden, die üblicherweise auf dem Boden abgestellt werden.

Die Erfindung hat die Aufgabe ein verbessertes Lagersystem für Stauräume in Wohnmobilen bereitzustellen.

Es wird ein Deckenlagersystem für einen Stauraum eines Wohnmobils offenbart. Das Deckenlagersystem ermöglicht eine flexible, raumeffiziente und leicht zugängliche Lagerung von Gegenständen im häufig ungenutzten oberen Raumbereich nahe der Decke des Stauraums.

Das Deckenlagersystem wird hängend an der Decke des Stauraums montiert. Das Deckenlagersystem ist derart ausgebildet, dass es an die übliche Bauweise von Stauräumen in Wohnmobilen angepasst ist.

Das Deckenlagersystem umfasst ein Schienensystem mit mindestens einer Schiene und mehreren Abstandhaltern. Die Abstandhalter sind dazu ausgebildet, das Schienensystem an der Decke des Stauraums in einer geeigneten Höhe anzuordnen, sodass das System ausgezogen werden kann.

Die meisten Stauräume von Wohnmobilen haben eine seitliche Tür oder Klappe mit einem umfangseitigen Rahmen. Dieser Rahmen bildet in der Regel eine Schwelle zwischen der Türöffnung (hier allgemein Beladeöffnung genannt) und der Decke des Stauraums. Um einen Auszug des Systems durch die Beladeöffnung zu ermöglichen, wird das Schienensystem vorteilhafterweise in einem ausreichenden Abstand zur Decke angeordnet.

In der bevorzugten Ausführungsform umfasst das Schienensystem zwei parallele Schienen. Es sind auch Ausführungsformen mit nur einer (z.B. mittig angeordneten) oder mehreren Schienen möglich.

Das Schienensystem ist dazu ausgebildet mindestens eine Kiste hängend zu halten und in Längsrichtung der Schiene ausziehbar zu halten. Vorzugsweise können mehrere Kisten hintereinander gehalten werden.

Die hängende Aufnahme der Kisten ist besonders vorteilhaft gegenüber bekannten Regalsystem oder Schienensystemen. Das Schienensystem ist dazu ausgebildet die Kisten an deren Oberseite hängend zu halten. Auf diese Weise ist kein Boden wie bei Schubladen oder Regalböden notwendig, auf die die Kisten im Stand der Technik gestellt werden. Die hängende Halterung der Kisten ist besonders platzsparend, wenn die Kisten aus dem System herausgenommen sind. Sollen beispielsweise hohe Gegenstände im Stauraum gelagert werden, die nahezu die ganze Höhe des Stauraums benötigen, können die Kisten entnommen werden und lediglich das flach an der Decke montierte Schienensystem beschränkt den Bauraum.

Die Kisten sind händisch in das Schienensystem einhängbar. Die Kisten werden vorzugsweise hängend zwischen zwei Schienen gehalten. Je nach Ausführungsform des Schienensystems können die Kisten am Schienensystem gleitend aufgehängt sein oder ortsfest an einer ausziehbaren Schiene aufgehängt sein.

In der bevorzugten Ausführungsform umfasst das Deckenlagersystem eine oder mehrere Kisten. Diese Kisten können bereits mit geeigneten Verbindungselementen, z.B. Gleitern, Rollen oder Steckverbindern, zur Verbindung mit dem Schienensystem versehen sein. In einer weiteren möglichen Ausführungsform kann das System auch ohne Kisten ausgeliefert werden. Das System kann geeignete Verbindungselemente umfassen, die lösbar mit Standardkisten verbunden werden können, um diese in das Schienensystem einhängen zu können.

Ein besonderer Vorteil des deckengebundenen Schienensystems ist, dass sich das System leicht von der Außenseite des Wohnmobils beladen lässt und gleichzeitig Raum unterhalb des Schienensystems zum einfachen Verstauen auf dem Boden des Stauraums verbleibt. Auf diese Weise wird der häufig ungenutzte Stauraum nahe der Decke effektiv und auf leicht zugängliche Weise genutzt.

In einer ersten möglichen Ausführung der Offenbarung umfasst das Schienensystem eine oder mehrere Profilschienen, in die die Kisten mittels Verbindungselementen, z.B. Gleiter oder Rollen, eingeführt werden. Die Verbindungselemente sind lösbar oder fest an den Kisten angeordnet. Die Kisten sind an den Verbindungselementen hängend an den Schienen des Schienensystems verschiebbar. Auf diese Weise können insbesondere mehrere Kisten hintereinander in das Schienensystem eingeschoben werden.

Diese Ausführungsform ist besonders einfach und platzsparend. Die Kisten können an der Oberseite der Beladungsöffnung in die Schienen eingeschoben oder aus den Schienen herausgezogen werden.

Die Verbindungselemente sind vorzugsweise an der Oberseite der Kisten angeordnet, um die Kiste deckennah hängend in das Schienensystem einschieben zu können.

Vorzugsweise umfasst das Deckenlagersystem eine oder mehrere Arretiervorrichtungen mit einer Klemme. Die Arretiervorrichtung kann zur Arretierung der Kisten in die Schiene eingeschoben und an der gewünschten Position arretiert werden. Die Arretiervorrichtung dient als Stopper und verhindert ein Verrutschen der Kisten.

Eine weitere mögliche Ausführung der Offenbarung umfasst ein Schienensystem mit einer oder mehreren Teleskopschienen. Die Teleskopschiene kann aus der Grundposition im Stauraum aus dem Stauraum heraus gezogen werden. Eine Teleskopschiene umfasst in der Regel mehrere überlappende Schienen, die in Längsrichtung zur Schiene zueinander verschiebbar sind, um die Teleskopschiene auszufahren oder zusammenzuschieben.

In diesen Ausführungen mit Teleskopschiene können nicht nur die Kisten einzeln ausgezogen oder eingeschoben werden, sondern die ganze Teleskopschiene mit den daran hängenden Kisten. Die Kisten sind vorzugsweise mit Steckverbindern ortsfest an der Teleskopschiene aufgehängt.

Die Teleskopschiene kann aus dem Stauraum in den Außenbereich ausgezogen werden. Anschließend können die Kisten aus dem ausgezogenen Schienensystem herausgehoben oder eingesetzt werden.

In einer besonders vorteilhaften Ausführungsform ist das Schienensystem um eine horizontale Achse schwenkbar an der Decke gelagert. Das Schienensystem kann auf einer Seite von der Decke nach unten geschwenkt werden, um dem Benutzer die Handhabung zu erleichtern. Diese Ausführung ist insbesondere für Schienensysteme mit Teleskopschiene und/oder hohe Stauräume vorteilhaft.

Die oben genannten Ausführungen und zugehörigen Merkmale können in Ihrer Gesamtheit oder in einzelnen Merkmalen miteinander kombiniert werden. Beispielsweise können gleitende Verbindungselemente mit einer Teleskopschiene kombiniert werden. Auch eine Ausführung mit schwenkbarer Profilschiene ist Gegenstand dieser Offenbarung.

Verschiedene Ausführungsformen und Merkmale der Offenbarung werden nachfolgend anhand der Zeichnungen im Detail beschrieben.

Die Erfindung ist in den Zeichnungen beispielhaft und schematisch dargestellt.

### Liste der Figuren:

- Figur 1:: ein Wohnmobil mit einem Stauraum und montiertem Deckenlagersystem;
- Figur 2:: eine Innenansicht eines Stauraums mit an der Decke montiertem Deckenlagersystem;
- Figur 3:: eine perspektivische Ansicht eines Deckenlagersystems mit Vergrößerung;
- Figur 4:: ein Querschnitt einer Profilschiene mit einem darin eingeführten Gleiter;
- Figur 5:: ein weitere Profilschiene mit einem Gleiter;
- Figur 6:: eine Ausführung mit seitlichen Schienen und Rollen;
- Figur 7:: eine Frontalansicht einer Rolle in einer Profilschiene;
- Figur: 8: eine perspektivische Ansicht einer Ausführungsform mit Teleskopschiene;
- Figur 9:: eine Schnittdarstellung einer Ausführung mit Teleskopschiene und Steckverbindern;
- Figur 10:: eine Ausführung mit Teleskopschiene im ausgezogenen Zustand;
- Figur 11:: eine Draufsicht auf eine Teleskopschiene im ausgezogenen Zustand;
- Figur 12:: eine perspektivische Ansicht auf ein schwenkbares Schienensystem mit Teleskopschienen.

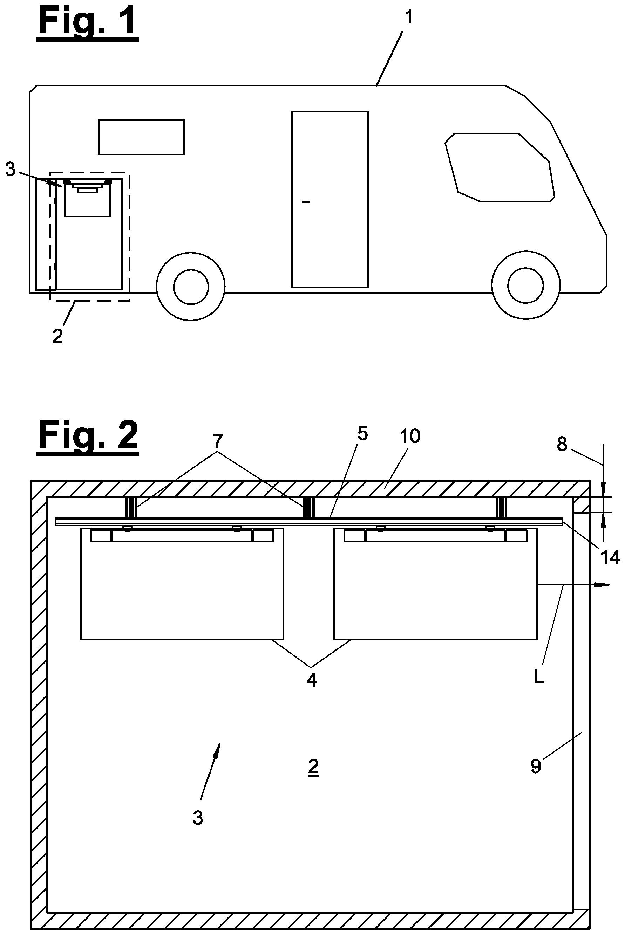

In Figur 1 ist ein typisches Wohnmobil 1 mit einem Stauraum 2, z.B. einer Heckgarage, dargestellt. Der Stauraum 2 ist mit einer Tür verschließbar, die an seitlichen Angeln aufgehängt ist. Bei geöffneter Tür ist der Stauraum von außen zugänglich. Im Stauraum 2 ist das Deckenlagersystem 3 montiert. Unterhalb des Deckenlagersystems 3 verbleibt auch bei eingehängten Kisten ausreichend Stauraum auf dem Boden des Stauraums, um dort Gegenstände abstellen zu können.

Figur 2 zeigt eine Innenansicht des Stauraums 2. Das Deckenlagersystem 3 ist dazu ausgebildet, an der Decke 10 des Stauraums angeordnet zu werden. Das Deckenlagersystem 3 umfasst mehrere Abstandhalter 7.

Die Abstandhalter 7 sind dazu ausgebildet das Schienensystem 5 von der Decke 10 zu beabstanden und zu halten. Die Abstandhalter 7 können beispielsweise aus Alu-Profilen gefertigt sein. Die Abstandhalter 7 können in einer besonders vorteilhaften Ausführungsform auch lösbar und/oder in der Länge verstellbar sein.

Die Abstandhalter 7 bewirken, dass das Schienensystem 5, insbesondere die Profilöffnung 14, im oberen Bereich der Beladeöffnung 9 unterhalb der häufig vorhandenen Schwelle 8 angeordnet ist. Die Schwelle 8 ist beispielsweise durch einen Rahmen einer Tür der Beladeöffnung 9 bedingt. In manchen Wohnmobilen deckt die Beladeöffnung 9 auch nicht die gesamte Höhe des Stauraums ab.

Das Schienensystem 5 umfasst eine oder mehrere Schienen. Die Schienen können von einer oder zwei Seiten des Wohnmobils zugänglich sein. Vorzugweise umfassen die Schienen eine oder mehrere Profilöffnungen 14, in die die Kisten 4, vorzugsweise über Verbindungselemente, eingeschoben, herausgezogen bzw. eingesteckt oder herausgehoben werden können.

In der in Figur 2 dargestellten Ausführungsform können mehrere, hier zwei, Kisten 4 hintereinander in das Schienensystem 5 hängend eingeschoben werden. Die Kisten 4 sind entlang der Längsrichtung L der Schienen verschiebbar, d.h. auch in die Schienen einschiebbar und herausziehbar.

Um eine einfache Zugänglichkeit des Schienensystems 5 für den Benutzer sicherzustellen, sind die Abstandhalter und die deckenseitige Anordnung besonders vorteilhaft. Die Profilöffnungen 14 sind durch die Beladeöffnung 9 direkt zugänglich. Gleichzeitig nimmt das Deckenlagersystem durch die flache Bauweise der hängenden Aufhängung der Kisten ohne Tragboden bei entnommenen Kisten wenig Bauraum im Stauraum 2 ein und lässt den Boden des Stauraums 2 zur weiteren Nutzung frei.

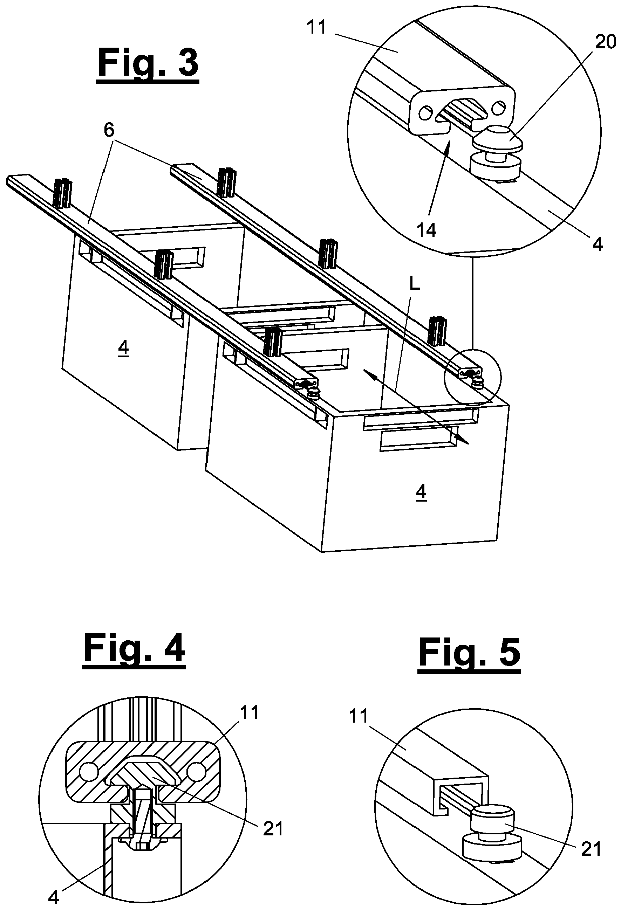

Figuren 3 und 4 zeigen eine mögliche Ausführung des Schienensystems mit zwei Schienen 6. Die Schiene 6 umfasst eine Profilschiene 11, in die ein Verbindungselement 20 eingebracht werden kann. Das Verbindungselement 20, z.B. ein Gleiter 21 oder eine Rolle 22, gleitet oder rollt innerhalb der Profilschiene und ist dabei entlang der Längsrichtung L der Schiene 6 verschiebbar.

Figuren 4 und 5 zeigen mögliche Ausführungsformen der Verbindungselemente als Gleiter 21. Der Gleiter 21 hat in einer besonders vorteilhaften Ausführungsform eine Pilzform. Die abgeschrägten Kanten dienen als Einführhilfe in die Profilschiene 11. Figur 5 zeigt eine einfache Ausführungsvariante einer Profilschiene 11 und eines Gleiters 21.

In einer vorteilhaften Ausführungsform sind die Schienen 6 oberhalb, d.h. deckenseitig, der Kisten 4 angeordnet. Die Kisten werden entsprechend unterhalb der Schienen 6 gehalten. Dies ermöglicht eine besonders flache Bauform.

Die Verbindungselemente 20 sind vorzugsweise an der Oberseite des Rands der Kisten 4 angeordnet. Die Verbindungselemente 20, z.B. die Gleiter 21, weisen zur Aufnahme in die Schienen 6 zur Decke.

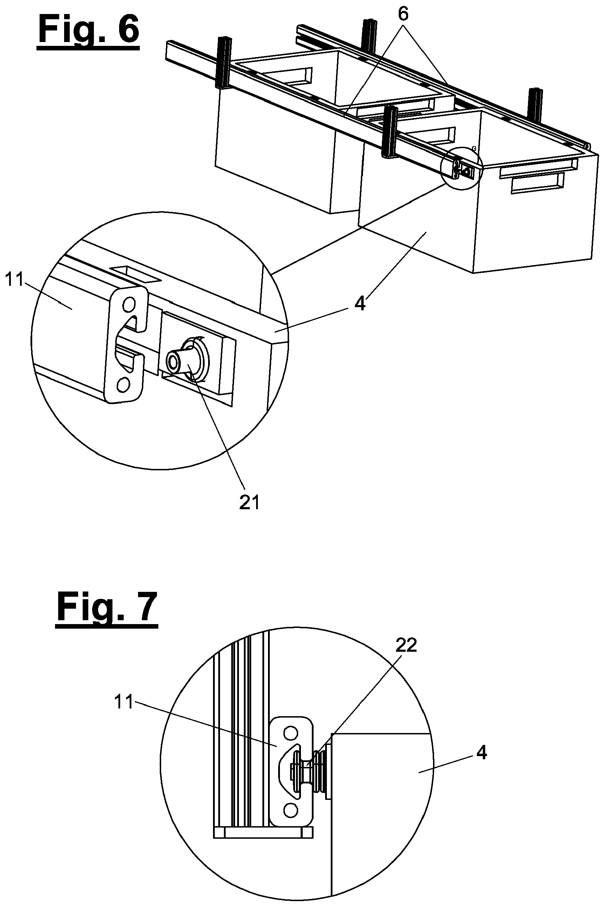

Figur 6 zeigt eine weitere mögliche Ausführungsform des Deckenlagersystems mit seitlich auf Höhe der Kisten angeordneten Schienen 6. Die Verbindungselemente 20, z.B. Gleiter 11 oder Rollen 22, sind an den Seiten der Kisten 4 angeordnet und weisen zur Aufnahme in die Schienen 6 zu den Seiten, d.h. parallel zur Decke, hin. Vorzugsweise sind die Verbindungselemente 20 im oberen Bereich der Kisten angeordnet.

Figur 7 zeigt eine mögliche Ausführungsform des Schienensystems mit seitlichen Profilschienen und Rollen 22 als Verbindungselemente.

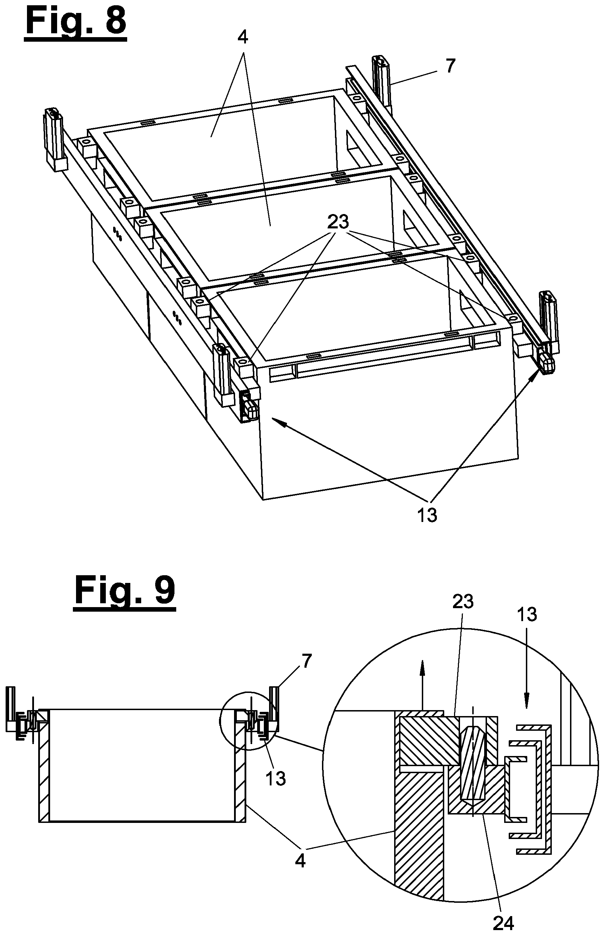

Figuren 8 bis 11 zeigen eine Ausführung des Deckenlagersystems mit Teleskopschienen 13.

Das Deckenlagersystem umfasst ein Schienensystem mit einer oder mehreren Teleskopschienen 13. Eine oder mehrere Kisten 4 sind in das Schienensystem 5 einhängbar. Vorzugsweise umfassen die Kisten 4 Steckverbinder 23 als Verbindungselemente.

In Figur 9 ist eine Schnittdarstellung einer Kiste 4 mit einem Steckverbinder 23 dargestellt. Die Kiste kann mit einem oder mehreren Steckverbindern 23 auf entsprechende Steckverbinder 24 an der Teleskopschiene 13 aufgesteckt werden. Die Kisten 4 werden mittels der Steckverbinder 23, 24 oder anderer Verbindungselemente in das Schienensystem eingehängt. Vorzugsweise sind die Kisten 4 ortsfest gegenüber der Teleskopschiene eingehängt, sodass die Kisten mit der Teleskopschiene ein- und ausgezogen werden.

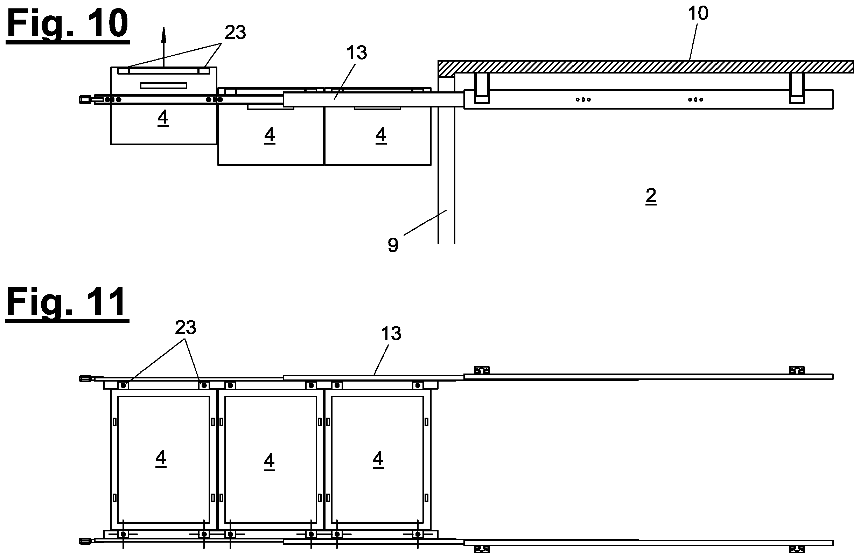

Figur 10 zeigt ein Deckenlagersystem mit einem Schienensystem, das an der Decke 10 eines Stauraums 2 montiert ist. Das Schienensystem umfasst Teleskopschienen 13, die mit den Kisten 4 durch die Beladeöffnung 9 des Stauraums 2 heraus ausgefahren werden können. Im ausgefahrenen Zustand können die Kisten 4 aus dem Schienensystem herausgehoben oder in dieses hineingesetzt werden. Die Kisten 4 sind mit den Steckverbindern 23 hängend am Schienensystem gehalten.

Figur 11 zeigt eine Draufsicht auf ein Schienensystem mit zwei ausgezogenen Teleskopschienen 13, zwischen denen die Kisten 4 eingehängt sind. Vorteilhafterweise können mehrere Kisten 4 in Längsrichtung der Schienen hintereinander in das Schienensystem eingehängt werden.

Die Ausführung mit Teleskopschienen hat den Vorteil, dass auch die zweite oder weiter hinten liegende Kisten bei ausgezogener Schiene direkt entnommen werden können, ohne zuerst die weiter vorne liegenden Kisten entnehmen zu müssen.

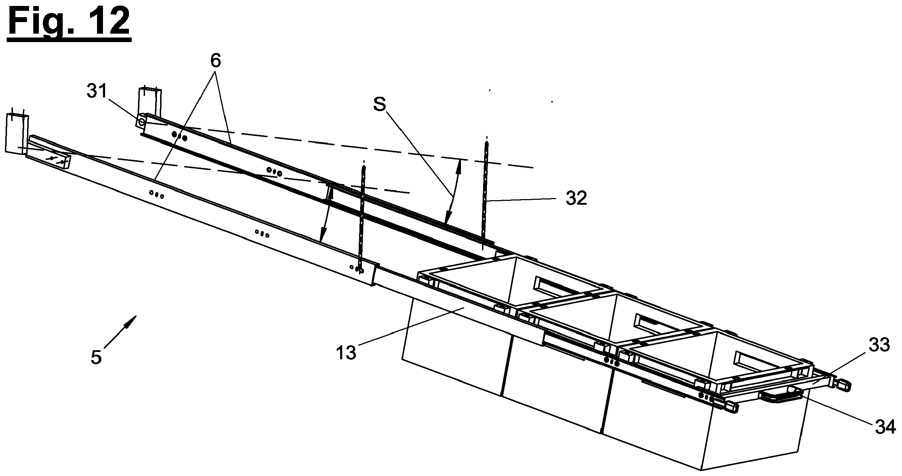

Figur 12 zeigt eine besonders vorteilhafte Ausführungsform mit einem um eine horizontale Achse schwenkbaren Schienensystem 5. Das Schienensystem umfasst eine Schwenklagerung 31. Vorzugweise ist das Schienensystem auf einer Seite mit der Schwenklagerung 31 schwenkbar an der Decke gelagert. Die Schwenklagerung 31 kann auch als Abstandhalter dienen. Das Schienensystem mit einer oder mehreren Schienen 6 ist um ein zur Decke parallel laufenden Achse schwenkbar. Eine der Lagerung abgewandte Seite der Schienen 6 ist von der Decke abwärts schwenkbar.

Vorzugsweise umfasst das Schienensystem 5 eine Schwenkführung 32. Die Schwenkführung ist dazu ausgebildet die Schwenkbewegung S zu führen, zu begrenzen und/oder zu unterstützen. In einer einfachen Ausführungsform kann die Schwenkführung aus einem oder mehreren Seilen oder Ketten bestehen, um die Schwenkbewegung zu begrenzen. Die Schienen sind bis zu einem vorbestimmten und/oder einstellbaren Winkel nach unten schwenkbar. Alternativ oder zusätzlich kann die Schwenkführung 32 Gasdruckfedern und/oder Führungsschienen umfassen.

Vorzugsweise sind die Schienen 6 durch einen Verbindungsrahmen 34 miteinander verbunden. Der Verbindungsrahmen versteift das Schienensystem und ermöglicht ein paralleles Schwenken mehrerer Schienen 6. Außerdem umfasst das Schienensystem vorzugsweise einen Griff 34, an dem der Benutzer das Schienensystem händisch schwenken kann.

Die schwenkbare Ausführung des Schienensystems ist besonders vorteilhaft, um bei hohen Decken des Stauraums dem Benutzer den Zugang zum Schienensystem zu erleichtern. Die Teleskopschienen sind vorzugsweise gebremst und/oder gedämpft.

### Bezugszeichen

- 1: Wohnmobil
- 2: Stauraum, Heckgarage
- 3: Deckenlagersystem
- 4: Kiste
- 5: Schienensystem
- 6: Schiene
- 7: Abstandhalter
- 8: Schwelle
- 9: Beladeöffnung
- 10: Decke
- 11: Profilschiene
- 12: Kistenaufhängung
- 13: Teleskopschiene
- 14: Profilöffnung

- 20: Verbindungselement
- 21: Gleiter
- 22: Rolle
- 23: Steckverbinder
- 24: Steckverbinder

- 31: Schwenklagerung
- 32: Schwenkführung
- 33: Verbindungsrahmen
- 34: Griff

- L: Längsrichtung, Auszugrichtung
- S: Schwenkwinkel

## Patentansprüche

1. Deckenlagersystem für einen Stauraum (2) eines Wohnmobils (1), umfassend ein Schienensystem (5) mit mindestens einer Schiene (6) und mehreren Abstandhaltern (7), wobei das Schienensystem (5) dazu ausgebildet ist, mit den Abstandhaltern (7) hängend an einer Decke (10) des Stauraums (2) befestigt zu werden, und dazu ausgebildet ist, mindestens eine Kiste (4) hängend und in Längsrichtung (L) der Schiene (6) ausziehbar zu halten.

2. Deckenlagersystem nach Anspruch 1, wobei das Schienensystem (5) dazu ausgebildet ist, mehrere Kisten (4) in Längsrichtung (L) hintereinander aufzunehmen.

3. Deckenlagersystem nach Anspruch 1 oder 2, umfassend ein Kistenaufhängungssystem (12) mit mehreren Verbindungselementen (20), vorzugsweise Gleitern (21), Rollen (22) oder Steckverbindern (23), wobei die Verbindungselemente (20) dazu ausgebildet sind, an der Kiste (4) angeordnet zu werden und lösbar mit der Schiene (6) verbunden zu werden.

4. Deckenlagersystem nach einem der vorhergehenden Ansprüche, wobei die mindestens eine Schiene (6) eine Profilschiene (11) umfasst.

5. Deckenlagersystem nach einem der vorhergehenden Ansprüche, wobei die mindestens eine Schiene (6) eine Teleskopschiene (13) umfasst.

6. Deckenlagersystem nach einem der vorhergehenden Ansprüche, wobei das Schienensystem (5) dazu ausgebildet ist, eine Profilöffnung (14) der Schiene (6) zum Einschub und Auszug der Kisten (4) unter einer deckenseitigen Schwelle (8) durch eine Beladeöffnung (9) des Stauraums (2) bereitzustellen.

7. Deckenlagersystem nach einem der vorhergehenden Ansprüche, umfassend eine Arretiervorrichtung mit einer lösbaren Klemme, wobei die Arretiervorrichtung gleitend in die Schiene (6) einführbar ist und mit durch die Klemme arretierbar ist, um die Position einer oder mehrerer Kisten (4) an der Schiene (6) festzulegen.

8. Deckenlagersystem nach einem der vorhergehenden Ansprüche, wobei das Schienensystem (5) dazu ausgebildet ist, eine ausziehbare Teleskopschiene (13) unter einer deckenseitigen Schwelle (8) an einer Beladeöffnung (9) des Stauraums (2) bereitzustellen.

9. Deckenlagersystem nach einem der vorhergehenden Ansprüche, umfassend Gleiter (21) oder Rollen (22), die an einem oberen Rand einer Kiste (4) angeordnet sind und durch eine Profilöffnung (14) in die Schiene (6) einführbar sind.

10. Deckenlagersystem nach einem der vorhergehenden Ansprüche, umfassend eine Teleskopschiene (13), die durch die Beladeöffnung (9) des Stauraums (2) hindurch ausziehbar ist.

11. Deckenlagersystem nach einem der vorhergehenden Ansprüche, umfassend eine Teleskopschiene (13) mit mehreren Steckverbindern (24), wobei eine oder mehrere Kisten (4) mit Steckverbindern (23) auf die Steckverbinder (24) der Teleskopschiene steckbar sind.

12. Deckenlagersystem nach einem der vorhergehenden Ansprüche, umfassend eine Schwenklagerung (31), mit der das Schienensystem (5) gegenüber der Decke um eine horizontale Achse schwenkbar ist.

13. Deckenlagersystem nach einem der vorhergehenden Ansprüche, umfassend eine Schwenkführung (32), vorzugsweise ein Seil, eine Kette oder einen Gasdruckdämpfer, mit der die Schwenkbewegung des Schienensystems (5) begrenzt, unterstützt und/oder geführt wird.

14. Deckenlagersystem nach einem der vorhergehenden Ansprüche, umfassend einen Verbindungsrahmen (33), der zwei Schienen (6), vorzugsweise schwenkbare Teleskopschienen (13) miteinander verbindet.
